# EUROPÄISCHE PATENTANMELDUNG

(11) **EP 1 619 109 A2**
(43) Veröffentlichungstag der Anmeldung: **25.01.2006**
(21) Anmeldenummer: 05015186.9
(22) Anmeldetag: 13.07.2005
(51) Int. Cl.: B62D 27/02

(54) **Fahzeugkarosserie mit zumindest einem Vorderwagen und einer Fahrgastzelle**

(30) Priorität: 22.07.2004 DE 102004035530
(71) Anmelder: Bayerische Motoren Werke Aktiengesellschaft, 80809 München (DE)
(72) Erfinder: Kremer, Horst, 82269 Geltendorf (DE)

(57) **Zusammenfassung**

Es ist eine Karosserie in Modulbauweise bekannt, bei der ein Vorderwagen mit den restlichen Modulen der Karosserie mechanisch verbunden wird. Die Verbindungen können beispielsweise durch Verschraubungen erfolgen. Aufgabe der Erfindung ist es, eine Fahrzeugkarosserie mit zumindest einem Vorderwagen und einer Fahrgastzelle zu schaffen, die eine besonders einfache modulare Fertigung des Fahrzeugs erlaubt.

Erfindungsgemäß weist eine Fahrzeugkarosserie zumindest einen Vorderwagen (1) und eine Fahrgastzelle (9) auf, die miteinander verschraubt und / oder vernietet und / oder verklebt sind. Die Verschraubungen und / oder Vernietungen erfolgen dabei ausschließlich senkrecht zur Fahrzeugebene bzw. die Verklebungen erfolgen ausschließlich in der Fahrzeugebene. So kann der Vorderwagen (1) bei der Montage relativ zur Fahrgastzelle (9) in Fahrzeuglängsrichtung und in Fahrzeugquerrichtung justiert werden, und Toleranzen können so ausgeglichen werden. Dadurch kann die Maßhaltigkeit leichter sichergestellt werden.

## Beschreibung

Die Erfindung betrifft eine Fahrzeugkarosserie mit zumindest einem Vorderwagen und einer Fahrgastzelle nach dem Oberbegriff des Patentanspruchs 1.

Aus der DE 38 09 456 A1 ist eine Karosserie in Modulbauweise bekannt, bei der ein Vorderwagen mit den restlichen Modulen der Karosserie mechanisch verbunden wird. Die Verbindungen können beispielsweise durch Verschraubungen erfolgen.

Aufgabe der Erfindung ist es, eine Fahrzeugkarosserie mit zumindest einem Vorderwagen und einer Fahrgastzelle zu schaffen, die eine besonders einfache modulare Fertigung des Fahrzeugs erlaubt.

Diese Aufgabe wird mit einer Fahrzeugkarosserie mit zumindest einem Vorderwagen und einer Fahrgastzelle mit den Merkmalen des Patentanspruchs 1 gelöst.

Erfindungsgemäß weist eine Fahrzeugkarosserie zumindest einen Vorderwagen und eine Fahrgastzelle auf, die miteinander verschraubt und / oder vernietet und /oder verklebt sind. Die Verschraubungen und / oder Vernietungen erfolgen dabei ausschließlich senkrecht zur Fahrzeugebene bzw. die Verklebungen erfolgen ausschließlich in der Fahrzeugebene. Die Fahrzeugebene wird durch die Fahrzeuglängs- und die Fahrzeugquerrichtung gebildet. So kann der Vorderwagen bei der Montage relativ zur Fahrgastzelle in Fahrzeuglängsrichtung und in Fahrzeugquerrichtung justiert werden, und Toleranzen können so ausgeglichen werden. Dadurch kann die Maßhaltigkeit der korriplettierten Fahrzeugkarosserie leichter sichergestellt werden, und die Fahrgastzelle sowie der Vorderwagen müssen nicht mehr so maßgenau gefertigt sein.

Bisherige geschraubte Lösungen für den Vorderwagen weisen komplexe Schnittstellen mit einer großen Anzahl von Verschraubungen in verschiedenen Ebenen auf. Dies erfordert eine hohe Maßhaltigkeit des Vorderwagens und der Fahrgastzelle an den Verbindungsstellen. Diese Maßhaltigkeit ist nur mit hohem Aufwand sicherzustellen und verursachen hohe Kosten und Gewicht. Zudem bedingt ein herkömmlicher Vorderwagen durch die Höhenlage der Träger für die Anbindung des Fahrwerks einen ungünstigen Kraftverlauf in die Fahrgastzelle. Die Anbindung muss im Bereich der Stirnwand besonders versteift werden, was zu erheblichen Kosten und zusätzlichem Gewicht führt. Durch die erfindungsgemäße Trennung des Vorderwagens von der Fahrgastzelle besteht die Möglichkeit, das Konzept für diesen Bereich des Fahrzeugs neu auszurichten. Dabei wird ein dem Bauraum und der neuen Schnittstelle angepasstes Trägerkonzept verwendet, welches günstigere Kraftpfade ermöglicht, besonders für Kräfte, die bei einem Aufprall des Fahrzeugs in die Bodengruppe eingeleitet werden. Durch die Lage der Schnittstelle im unteren Bereich des Vorderwagens werden die Kräfte direkt in den Boden und nur zu einem geringen Anteil in die Stirnwand des Fahrzeugs eingeleitet. Der obere Bereich der Schnittstelle ist so angeordnet, dass das gesamte Fahrwerk vorne Bestandteil des Vorderwagens wird, wodurch Fahrwerksvarianten die Karosserie nicht zwangsläufig beeinflussen und die Montage des Fahrwerks vereinfacht wird.
Der Vorderwagen ist als eine vormontierte Einheit mit der Fahrgastzelle verbindbar ist. Der Vorderwagen kann dabei bevorzugt als mit Fahrwerk und / oder Motor komplettierte Einheit mit der Fahrgastzelle verbunden werden.

Bei einer herkömmlichen Fahrzeugkarosserie ist eine Mischbauweise mit unterschiedlichen Materialen mit erheblichem Aufwand verbunden, um die Anforderungen an Korrosionsbeständigkeit und Akustik zu erfüllen. Durch die erfindungsgemäße geschraubte Lösung lässt sich der Einsatz eines anderen Materials für den Vorderwagen als für die Fahrgastzelle mit geringem Aufwand und geringen Korrosionsrisiken darstellen.

Der modulare Aufbau der Fahrzeugkarosserie aus zumindest einem Vorderwagen und einer Fahrgastzelle ermöglicht es, dass unterschiedliche Vorderwägen an die Fahrgastzelle anbindbar sind. So kann ein unterschiedlicher Radstand, besonders eine andere Lage der Vorderachse, wie sie für Coupes oder Roadster angestrebt wird, ohne maßgebliche Beeinflussung der Fahrgastzelle dargestellt werden. Die Generierung der Varianten erfolgt ausschließlich durch die Montage unterschiedlicher Vorderwägen. Bei bekannten Fahrzeugkarosserien dagegen muss bei einem Vorderwagen, welcher Bestandteil der Karosserie ist, jede Antriebsvariante berücksichtigt werden oder Karosserievarianten erzeugt werden. Dies führt zu Gewichts- und Kostennachteilen. Der modulare Aufbau ermöglicht es, die Varianten ausschließlich durch die Verwendung unterschiedlicher Vorderwagen zu generieren.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht der wesentlichen Bauteile der tragenden Struktur eines Vorderwagens und
- Fig. 2: eine perspektivische Montagedarstellung zur Anbringung des Vorderwagens aus Fig. 1 an eine Fahrgastzelle.

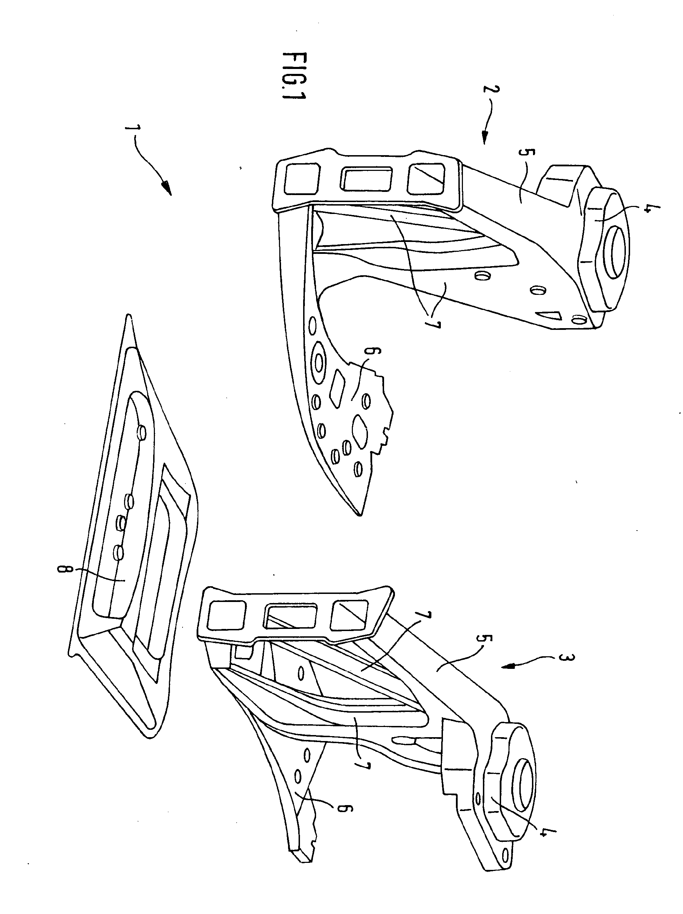

In Fig. 1 sind die wesentlichen tragenden Bauteile eines Vorderwagens 1 einer Kraftfahrzeugkarosserie dargestellt. Zu sehen sind ein linkes und ein rechtes Motorträgermodul 2 und 3, das jeweils aus einer Federbeinaufnahme 4, einem Motorträger 5, einem unteren Bodenträger 6 und Verbindungen 7 zwischen der Federbeinaufnahme 4 und dem Motorträger 5 mit dem Bodenträger 6 besteht. Die Bodenträger 6 weisen dabei ein freies Ende auf, das nach hinten ragt. Die beiden beiden Motorträgermodule 2 und 3 werden mit einer flächigen Bodenblech 8 zum Vorderwagen 1 schubfest miteinander verbunden.

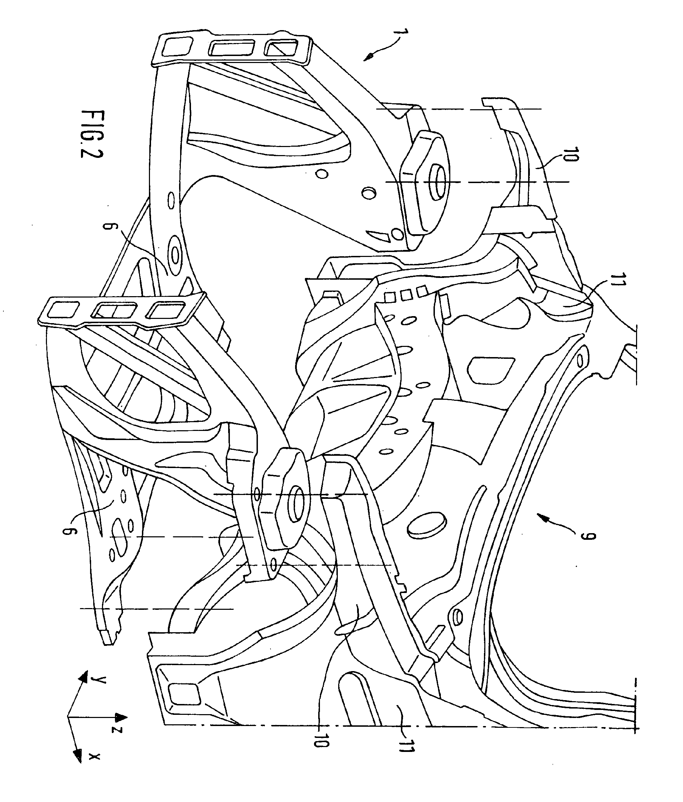

Dieser Vorderwagen 1 kann nun - wie in Fig. 2 gezeigt - mit einer Fahrgastzelle 9 verschraubt werden. Dazu ist an der Fahrgastzelle 9 zur Anbindung des Vorderwagens 1 beidseitig je ein oberer Stützträger 10 an einer A-Säule 11 der Fahrgastzelle 9 knapp unterhalb der Brüstungslinie angebracht ist, der frei nach vorne ragt. In Fahrzeuglängsrichtung bilden die Stützträger 10 dabei einen Überlappungsbereich mit dem Vorderwagen 1. Zu Verbindung werden die Stützträger 10 an der Fahrgastzelle 9 mit dem Bereich des Vorderwagens 1 um die Federbeinaufnahmen 4 senkrecht zur Fahrzeugebene (Ebene in Fahrzeuglängs- und Fahrzeugquerrichtung) verschraubt, wie es durch die gestrichelten Linien in Fig. 2 angedeutet ist. Die nach hinten ragenden Bodenträger 6 des Vorderwagens 1 kommen auf der Unterseite des Bodens der Fahrgastzelle 9 zum Liegen und werden dort ebenfalls senkrecht zur Fahrzeugebene mit der Fahrgastzelle 9 verschraubt.

Auf diese Weise können bei der Montage des Vorderwagens 1 an die Fahrgastzelle 9 Toleranzen des Vorderwagens 1 relativ zur Fahrgastzelle 9 in Fahrzeuglängs- und Fahrzeugquerrichtung ausgeglichen werden, da die Verschraubungen ausschließlich senkrecht zur Fahrzeuglängs- und Fahrzeugquerrichtung erfolgen. Außerdem kann der Vorderwagen 1 als Vormontageeinheit zunächst mit weiteren Bauteilen komplettiert werden, bevor er mit der Fahrgastzelle 9 verschraubt wird.

Die Anbindung des Vorderwagens 1 sowohl über die Stützträger 10 als auch direkt an den Boden der Fahrgastzelle 9 ermöglicht günstige Kraftpfade, die bei einem Crash die Belastung der Stirnwand der Fahrgastzelle 9 gering halten. Das gesamte Fahrwerk ist Bestandteil des Vorderwagens 1, wodurch Fahrwerksvarianten nicht zwangsläufig die restliche Karosserie bzw. die Fahrgastzelle 9 beeinflussen und die Montage des Fahrwerks vereinfacht wird. Auch können mit geringem Aufwand Fahrgastzelle 9 und Vorderwagen 1 aus unterschiedlichen Materialen bestehen.

## Patentansprüche

1. Fahrzeugkarosserie mit zumindest einem Vorderwagen (1) und einer Fahrgastzelle (9), die miteinander verschraubt und / oder vernietet und / oder verklebt sind, **dadurch gekennzeichnet, dass** die Verschraubungen und / oder Vernietungen ausschließlich senkrecht zur Fahrzeugebene bzw. die Verklebungen ausschließlich in der Fahrzeugebene erfolgen.

2. Fahrzeugkarosserie nach Anspruch 1, **dadurch gekennzeichnet, dass** an der Fahrgastzelle (9) zur Anbindung des Vorderwagens (1) beidseitig je ein oberer Stützträger (10) an einer A-Säule (11) der Fahrgastzelle (9) knapp unterhalb der Brüstungslinie angebracht ist, der frei nach vorne ragt.

3. Fahrzeugkarosserie nach Anspruch 2, **dadurch gekennzeichnet, dass** der Vorderwagen (1) über die beiden Stützträger (10) mit der Fahrgastzelle (9) verbunden ist.

4. Fahrzeugkarosserie nach einem der vorhergehenden Ansprüche, **dadurch gekennzeichnet, dass** der Vorderwagen (1) beidseitig je einen unteren Bodenträger (6) aufweist, die nach hinten bis in den vorderen Bereich des Bodens der Fahrgastzelle (9) ragen.

5. Fahrzeugkarosserie nach Anspruch 4, **dadurch gekennzeichnet, dass** der Vorderwagen (1) über die Bodenträger (6) mit der Fahrgastzelle (9) verbunden ist.

6. Fahrzeugkarosserie nach Anspruch 4 oder 5, **dadurch gekennzeichnet, dass** die beiden Bodenträger (6) des Vorderwagens (1) mit einem flächigen Bauelement (8) schubfest miteinander verbunden sind.

7. Fahrzeugkarosserie nach einem der vorhergehenden Ansprüche, **dadurch gekennzeichnet, dass** unterschiedliche Vorderwägen (1) an die Fahrgastzelle (9) anbindbar ist.

8. Fahrzeugkarosserie nach Anspruch 7, **dadurch gekennzeichnet, dass** der Vorderwagen (1) zusammen mit dem Fahrwerk als eine Einheit mit der Fahrgastzelle (9) verbindbar ist.
